# EUROPEAN PATENT APPLICATION

(11) **EP 2 175 626 A1**
(43) Date of publication of application: **14.04.2010**
(21) Application number: 09180826.1
(22) Date of filing: 22.06.2007
(51) Int. Cl.: H04M 1/725

(54) **Method for appending a signature to a size limited text message.**

(30) Priority: 13.07.2006 US 485331
(62) Divisional of application: 07110920.1
(71) Applicant: Comverse, Ltd., Tel Aviv 69710 (IL)
(72) Inventor: Bin, Dror, 46424, HERZELIA (IL)
(74) Representative: CAPRI

(57) **Abstract**

A method for sending a text message of a limited size using a cellular network, the method comprising:
receiving a text me ssage (100) via a cellular network;
obtaining (120) a signature from a database (30);
appending said signature to said text message, thus yielding a resultant text message; and
sending (130) said resultant text message to a Short Messaging Service ("SMS") center (40).

## Description

The present invention relates generally to the field of size limited messaging systems, such as Short Messaging Service (SMS) messaging. More particularly, this invention relates to a method of appending signatures to size limited text messages using a cellular network.

### BACKGROUND OF THE INVENTION

Electronic mail software and even certain two-way text paging systems provide the user with the ability to automatically append a "signature" to outgoing messages. This signature is generally a predefined segment of text that identifies the message sender (but could be any data that a user wishes to routinely append to messages). When the sender elects to send the text, or alternatively when a new message is initiated, the signature is appended at the end of the message. This saves the user from having to enter an identifying segment of information (e.g., name, address, email address, phone numbers, etc.) each time a message is created or sent. Because there is generally no practical limit to the size of messages sent on such systems, such signatures are readily accommodated without causing any problems.

Short Messaging Services such as supported by the Global System for Mobile Communications (GSM), Code Division Multiple Access (CDMA), Time Division Multiple Access (TDMA), or Universal Mobile Telecommunications System (UMTS) cellular phone standards provide a user with a suitable messaging device and an account with the ability to send short messages to other users. Such messages may be limited in size, for example to approximately 160 characters in certain systems, or multiples of a set number of characters based on the transmission protocol including punctuation, spaces, etc. Because the messages are rather severely limited in size, automatic signatures, such as those used in popular email programs, are not used because the signature may not fit in a given message. Thus the user who wishes to add a signature or graphical icon to his or her short message must do so by manually entering the signature at the end of each message.

One proposed solution for appending a signature to a size limited message is disclosed in U.S. Patent No. 6,948,130 issued to Long et al. Long discloses a messaging device that allows a user to store signatures within the memory of the messaging device. After entry of a size limited message, such as an SMS message, a processor of the messaging device determines the available space and selects the signature that will fit within the available space. The selected signature is then appended to the size limited message prior to sending the message from the messaging device. Such a solution as proposed by Long requires that the messaging device itself be configured to append signatures to SMS messages. The vast majority of existing messaging devices being used on a cellular network may have the hardware and/or software to be capable of appending a signature to a size limited text message in the manner disclosed by Long. For example, older or more basic cell phones often have minimal processing capabilities and memory storage, which could cause a lag while sending text messages and limit the storage of signatures. Accordingly, a user of a cellular network may have to exchange his or her messaging device for a new messaging device with greater processing capabilities, or obtain a software upgrade for his or her messaging device if the existing processing capability is sufficient and only the software is lacking. US-2003/0158858 discloses another prior art device.

### SUMMARY OF THE INVENTION

In one exemplary embodiment, the present invention relates to a method for sending a text message of a limited size using a cellular network. The method includes inputting a signature into a personalization database, wherein a sender of the text message pre-determines the signature. The method further includes composing the text message on a messaging device, transmitting the text message to a personalization server, and selecting the signature for the text message, wherein the signature is selected by the personalization server from the personalization database. The server transmits the text message with the signature to an SMS center. The text message with the signature is then delivered to a receiving messaging device.

In another exemplary embodiment, the present invention relates to a cellular network. The cellular network includes a sending messaging device configured to send a text message input by a sender and a personalization server in communication with the sending messaging device. A personalization database is configured to be accessed by the personalization server, wherein a pre-determined signature from the sender is stored in the personalization database. An SMS center is in communication with the personalization server. The cellular network further includes a receiving messaging device. The personalization server is configured to retrieve the pre-determined signature from the personalization database and append the pre-determined signature to the text message input by the sender if a combined size of the pre-determined signature and the text message is less than a size limit.

Other exemplary embodiments and advantages of the invention will be apparent from the following description and the appended claims.

### BRIEF DESCRIPTION OF THE DRAWINGS

Figure 1 shows a block diagram of a cellular network in accordance with an exemplary embodiment of the present invention.

Figure 2 shows a sending mobile phone displaying a text message in accordance with an exemplary embodiment of the invention.

Figure 3 shows a receiving mobile phone displaying a text message in accordance with an exemplary embodiment of the invention.

### DETAILED DESCRIPTION OF THE PREFERRED EMBODIMENTS

Embodiments of the present invention relate generally to a method for sending a size limited text message, such as an SMS message, with a signature.

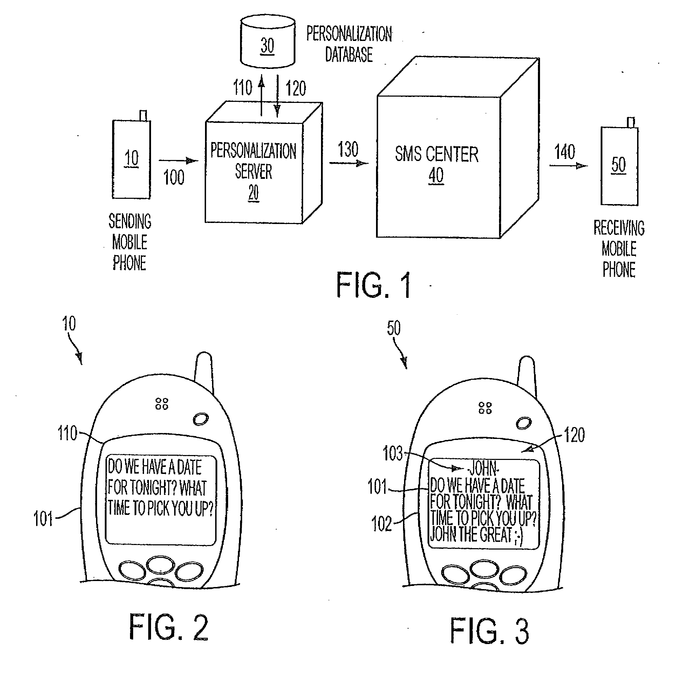

In Figure 1, a cellular network for sending a size limited text message in accordance with an embodiment of the present invention is shown. The cellular network includes a sending mobile phone 10, a personalization server 20, a personalization database 30, an SMS center 40, and a receiving mobile phone 50. Prior to sending a text message, a sender pre-determines a signature to be used for text messages to be sent over the cellular network. The pre-determined signature may be stored in the personalization database 30 for future text messages to be sent from the sending mobile phone 10. Several methods are available for transmitting the pre-determined signature to the personalization database 30. In one embodiment, the user may use a web interface to transmit the pre-determined signature to a network provider, which may then store the pre-determined signature on the personalization database 30. In another embodiment, the user may send a text message to a designated phone number or email address in order to activate the signature service and transmit the pre-determined signature for storage on the personalization database 30. If the user is a member of a group, such as a company, the pre-determined signature may be set by the group or company. In this embodiment, the pre-determined signature may identify the user as a member of the group to recipients of text messages sent by the user.

To send a text message over a cellular network in accordance with an embodiment of the present invention, the sender may compose a text message on the sending mobile phone 10. The sender then sends the text message 100, which is received by the personalization server 20. Upon receipt, the personalization server 20 may query 110 the personalization database 30 in order to determine whether the sender has stored a pre-determined signature in the personalization database 30. If so, the personalization server 20 may obtain 120 the pre-determined signature from the personalization database 30.

Prior to appending the pre-determined signature to the text message, the personalization server 20 may determine the size of the text message and compare the size with a size limit for sending the text message over the cellular network. For example, the text message may be an SMS message limited in size to 160 characters. If the combined size of the text message and the pre-determined signature is less than 160 characters, then the pre-determined signature may be appended to the text message by the personalization server 20. The combined text message and pre-determined signature may then be sent 130 to the SMS center 40. Upon receipt, the SMS center 40 may then transmit 140 the combined text message and pre-determined signature to the receiving mobile phone 50. Those having ordinary skill in the art will appreciate that the embodiment shown in Figure 1 is a simplified example of a cellular network for illustrative purposes. For example, there may be intervening network components between the SMS center 40 and the ultimate transmission to the receiving mobile phone 50.

Figures 2 and 3 show a sending mobile phone 10 and a receiving mobile phone 50, respectively, in accordance with an embodiment of the present invention. In Figure 2, the sending mobile phone 10 is shown with a text message 101 entered by a user is displayed on a screen 110. Prior to sending the displayed text message 101, the user of the sending mobile phone 10 has pre-determined a signature (not shown) and input the pre-determined signature in a personalization database for use with text messages. For example, the pre-determined signature may be "John the GREAT ;-)". The text message 101 shown on the sending mobile phone 10 may be sent over a cellular network, such as the cellular network shown in Figure 1. Because the text message 101 is relatively short (less than 60 characters), the personalization server will determine that sufficient space exists for the pre-determined signature if the size is limited to 160 characters, as is the case with SMS messages.

After appending the pre-determined signature to the text message, the combined message may then be sent to an SMS center and transmitted to the receiving mobile phone 50 shown in Figure 3. In the prior art, lacking a pre-determined signature, the receiving mobile phone 50 may only display the text message 101 and the name 103 of the sender, if the receiving mobile phone has a name in its directory that corresponds to the phone number of the sender. Lacking the name in the directory of the receiving mobile phone 50, the phone number of the sending mobile phone 10 might be shown on the display 120 instead of the name 103 of the sender. In accordance with an embodiment of the present invention, the receiving mobile phone 50 receives further identifying information for the sender in the form of the pre-determined signature 102, which has been appended to the text message 101 by the personalization server. Although the above example utilizes mobile phones, those having ordinary skill in the art will appreciate that other messaging devices besides mobile phones may be used without departing from the scope of the present invention.

Embodiments of the present invention may be implemented using existing cellular networks with relatively minor upgrades, a personalization server and a personalization database. Messaging devices already capable of sending size-limited text messages, such as SMS messages, may use a cellular network in accordance with embodiments of the present invention without updating or otherwise modifying the messaging devices. Thus, the cost and/or hassle of upgrading the messaging device may be avoided by users of the cellular network.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method for sending a text message of a limited size using a cellular network, the method comprising:
receiving a text message (100) via a cellular network;
obtaining (120) a signature from a database (30);
appending said signature to said text message, thus yielding a resultant text message; and
sending (130) said resultant text message to a Short Messaging Service ("SMS") center (40).

2. The method of claim 1, further comprising, prior to said appending:
determining a combined size of said text message and said signature.

3. The method of claim 2, further comprising, prior to said appending:
determining that said combined size of said text message and said signature is less than a pre-determined size limit.

4. The method of claim 1, further comprising, prior to said receiving,
receiving said signature in a text message; and
storing said signature in said database.

5. The method of claim 1, wherein said signature is input into said database by a sender using a web interface.

6. A cellular network, comprising:
a server (20);
a database (30) configured to be accessed by said server, wherein said database has a signature stored therein; and
a Short Messaging Service ("SMS") center (40) in communication with said server, wherein said server:
(a) receives a text message (100) via a cellular network;
(b) retrieves (120) said signature from said database,
(c) appends said signature to said text message if a combined size of said signature and said text message is less than a size limit, thus yielding a resultant text message, and
(d) sends (130) said resultant text message to said SMS center.
